Europäisches Patentamt

European Patent Office

Office européen des brevets

(19)

(11) Veröffentlichungsnummer: **0 049 777**
**B1**

(12) # EUROPÄISCHE PATENTSCHRIFT

(45) Veröffentlichungstag der Patentschrift:
20.03.85

(51) Int. Cl.⁴: **C 09 B 67/42**

(21) Anmeldenummer: **81107341.0**

(22) Anmeldetag: **17.09.81**

(54) **Homogene flüssige Farbmittel.**

(30) Priorität: **14.10.80 DE 3038683**
**15.04.81 DE 3115210**

(43) Veröffentlichungstag der Anmeldung:
**21.04.82 Patentblatt 82/16**

(45) Bekanntmachung des Hinweises auf die Patenterteilung:
**20.03.85 Patentblatt 85/12**

(84) Benannte Vertragsstaaten:
**BE CH DE FR GB IT LI**

(56) Entgegenhaltungen:
**GB - A - 1 564 098**

**CHEMICAL ABSTRACTS, Band 82, Nr. 18, 5. Mai 1975,
Seite 79, Nr. 113257a, Columbus, Ohio, USA**

(73) Patentinhaber: **BASF Aktiengesellschaft,
Carl-Bosch-Strasse 38, D-6700 Ludwigshafen (DE)**

(72) Erfinder: **Derber, Bernd, An der Froschlache 3/13,
D-6700 Ludwigshafen (DE)**
Erfinder: **Schmidt-Hellerau, Christof,
Rheinrugenstrasse 45, D-6700 Ludwigshafen (DE)**
Erfinder: **Senninger, Rudolf, Dr., Am Dorfzaun 10,
D-6700 Ludwigshafen (DE)**

EP 0 049 777 B1

## Beschreibung

Die Erfindung betrifft homogene flüssige Farbmittel zum Färben von Leim mit 20 bis 70% farbgebenden Anteilen, enthaltend einen oder mehrere lösliche anionische oder kationische Farbstoffe, ein oder mehrere feinverteilte Pigmente, Wasser, wasserlösliche organische Lösungsmittel und Dispergiermittel sowie gegebenenfalls wasserlösliche organische Säuren.

Die kationischen und anionischen Farbstoffe, also ionogenen Farbstoffe, sind in der Regel durch geeignete Anionen bzw. Kationen in dem zur Verwendung kommenden Lösungsmittel gut löslich gemacht.

Kationische Farbstoffe für die erfindungsgemässen Farbmittel entstammen vorwiegend der Di- oder Triarylmethan-, Xanthen-, Azo-, Cyanin-, Azacyanin-, Methin-, Acridin-, Safranin-, Oxazin-, Indulin- oder Nigrosin-Reihe. Einzelne Verbindungen sind z.B. Basic Yellow 2 (C.I. 41000), Basic Red 1 (C.I. 45160), Basic Violet 10 (C.I. 45170), Basic Blue 26 (C.I. 44045), Basic Blue 7 (C.I. 42595), Basic Blue 1 (C.I. 42025), Basic Violet 1 (C.I. 42535), Basic Violet 3 (C.I. 42555), Basic Green 1 (C.I. 42040), Basic Green 4 (C.I. 42000) sowie Phenazin-Farbstoffe, wie Solvent Blue 7 (C.I. 50400). Farbstoffe aus der Azo-, Triarylmethan- und Xanthenreihe sind bevorzugt.

Als Anionen kommen für wässrige Farbmittel die üblichen von anorganischen Säuren und niederen Carbonsäuren abgeleiteten, wie Chlorid, Bromid, Sulfat, Methosulfat, Ethosulfat, Nitrat, Formiat, Acetat oder Propionat in Betracht. Wenn Löslichkeit in organischen Lösungsmitteln wesentlich ist, sind insbesondere langkettige Carbonsäureanionen wie Oleat geeignet.

Man kann die gut löslich machenden Anionen auch dadurch einführen, dass man die kationischen Farbstoffe in Form der zugehörigen Farbbasen mit den die Anionen liefernden Säuren umsetzt.

Als Farbbasen seien beispielsweise Solvent Yellow 34 (C.I. 41010:1), Solvent Orange 3 (C.I. 11270:1), Solvent Red 49 (C.I. 45170:1), Solvent Violet 8 (C.I. 42532:1), Solvent Violet 9 (C.I. 42555:1), Solvent Blue 2 (C.I. 42563:1), Solvent Blue 4 (C.I. 44045:1) und Solvent Black 7 (C.I. 50415:1) genannt.

Als anionische Farbstoffe kommen insbesondere sulfonsäuregruppenhaltige Verbindungen aus der Reihe der Azo-, Anthrachinon-, Metallkomplex-, Triarylmethan- oder Stilben-Reihe in Betracht, wobei insbesondere Azofarbstoffe und Phthalocyaninderivate bevorzugt sind.

Einzelne anionische Farbstoffe sind beispielsweise die im Colour Index beschriebenen Farbstoffe Acid Yellow 3 (C.I. 47005), Acid Yellow 36 (C.I. 13065), Acid Yellow 19 (C.I. 18967), Acid Orange 7 (C.I. 15510), Acid Orange 8 (C.I. 15575), Acid Red 88 (C.I. 15620), Acid Red 351 (C.I. 28683), Acid Violet 90 (C.I. 18762), Acid Blue 9 (C.I. 42090), Acid Blue 193 (C.I. 15707), Direct Blue 86 (C.I. 74180) sowie

2,5-Dichlor-4-sulfo-anilin → 3-Cyano-4-methyl-

2,6-di(β-hydroxy-ethylamino)-pyridin (als Dibutylethanolaminsalz),

2-Hydroxy-3-nitro-5-sulfo-anilin → 1-Phenyl-3-methyl-pyrazolon-5 (als Chrom-(1 : 2)-Komplex)

2-Hydroxy-4-sulfo-6-nitro-naphthylamin-1 → β-Naphthol (als Chrom-(1 : 2)-Komplex)
und

2-Hydroxy-3-sulfo-5-nitro-anilin → 1-Phenyl-3-methyl-pyrazolon-5 (als Chrom-(1 : 2)-Komplex).

Als Wasserlöslichkeit vermittelnde Kationen sind dabei insbesondere Alkali (Li$^\oplus$, Na$^\oplus$, K$^\oplus$), Ammonium- und substituierte Ammoniumkationen, insbesondere Alkanolammoniumkationen zu nennen.

Für organische Lösungsmittel enthaltende erfindungsgemässe Farbmittel sind als anionische Farbstoffe insbesondere Metallkomplex-Farbstoffe geeignet, z.B. die Chrom- oder Kobalt-Komplexe von Azo- oder Azomethin-Farbstoffen sowie Kupferphthalocyanin-Farbstoffe.

Als Kationen für die Farbstoffe sind insbesondere längerhaltige Alkylammoniumreste geeignet, entsprechende Farbstoffe sind z.B. in den deutschen Patentschriften DE-C-1 226 727, 1 263 947 und 2 334 228 beschrieben.

Voraussetzung für eine Verwendbarkeit in den erfindungsgemässen Farbmitteln ist bei allen genannten Farbstoffen, dass sie sich in möglichst hoher Konzentration lösen lassen. Die Farbstoffe sind auch in Form von konzentrierten Farbstofflösungen verwendbar und Methoden zur Herstellung solcher Lösungen sind insbesondere in der Patentliteratur zahlreich beschrieben, z.B. in den Patentanmeldungen DE-A-3 020 891, DE-A-3 036 556, DE-B-1 240 036, DE-B-2 049 620, DE-A-2 228 260, DE-A-2 852 863, DE-A-2 816 506 oder DE-B-2 413 369 sowie den DE-C-1 259 484 und DE-C-2 334 228.

Als Pigmente kommen anorganische und organische in Betracht. Einzige Voraussetzung für ihre Verwendbarkeit ist, dass sie sich im Farbmittel fein verteilen lassen. Eine repräsentative Auswahl von geeigneten Pigmenten findet sich im Colour Index, Kapitel Pigmente. Einzelne bevorzugte Pigmente und Pigmentgruppen sind beispielsweise: Russ, Eisenoxide, Phthalocyanine, Azo-Pigmente, Nickeltitangelb, Chromgelb, Molybdatorange, Miloriblau sowie Chinacridon-, Perylen-, Oxazin- und anthrachinoide Pigmente.

Aus ökonomischen Gründen sind preiswerte Pigmente wie Russ, Eisenoxide, Azoverbindungen und Phthalocyanine bevorzugt.

Als Dispergiermittel sind praktisch alle Verbindungen geeignet, die üblicherweise für die Herstellung von wässrigen Pigmentdispersionen verwendet werden. Es kommen sowohl anionische, als auch kationische, vorzugsweise nichtionogene Dispergiermittel in Betracht. Geeignete nichtionogene Tenside sind beispielsweise Polyethylenglykole sowie Ethoxylierungsprodukte auf der Basis von linearen Fettsäuren, Fettaminen, Fettsäureamiden und Fettalkoholen. Geeignete anionaktive Dispergiermittel sind z.B. Fettalkoholethersulfate und Alkylphenolethersulfate. Als kationaktive Tenside können beispielsweise quarternäre Ammoniumsalze langkettiger Fettalkylamine verwendet werden. Bei Verwendung von anionaktiven bzw. kationaktiven Tensiden ist jedoch sorgfältig darauf zu achten, dass Reaktionen mit dem anionischen oder kationischen Farbstoff vermieden werden.

Die erfindungsgemässen Farbmittel enthalten Wasser und wasserlösliche organische Lösungsmittel.

Als wasserlösliche organische Lösungsmittel eignen sich z.B. Alkanole, Glykole, Glykolether, Amide, Tetrahydrofuran, Butyrolacton, Dioxan, Dimethylsulfoxid, niedere Ketone sowie aliphatische Carbonsäuren, wobei von diesen Ameisensäure und Essigsäure bevorzugt sind.

Die erfindungsgemässen Farbmittel enthalten Farbstoffe und Pigmente in Mengen von etwa 20–70%, vorzugsweise 40–60%. Das Mengenverhältnis von löslichem Farbstoff zu Pigment kann in weiten Grenzen variiert werden, bestimmend dafür sind im wesentlichen der gewünschte Farbton und ökonomische Faktoren. Der Anteil an (inklusive Wasser) Lösungsmitteln liegt bei 30–80%, vorzugsweise 40–60%, bezogen jeweils auf die Gesamtmenge. Die Menge der gegebenenfalls anwesenden Säuren und Tenside kann bis zu 30%, vorzugsweise 5 bis 20%, betragen.

Die Auswahl der Farbstoffe richtet sich selbstverständlich ebenfalls nach dem Verwendungszweck und der Löslichkeit im vorgegebenen Medium.

Zur Herstellung der erfindungsgemässen Farbmittel kann man z.B. die Lösung eines gut löslichen Farbstoffs in einem wasserlöslichen organischen Lösungsmittel mit einer Pigmentdispersion mischen. Man kann aber auch ein Pigment direkt in der Farbstofflösung dispergieren. Man kann den erfindungsgemässen Farbmitteln natürlich auch noch weitere Stoffe, wie Verdickungsmittel oder Bindemittel zusetzen. Einzelheiten der Herstellung können den Beispielen entnommen werden, in denen sich Angaben über Teile und Prozente, sofern nicht anders vermerkt, jeweils auf das Gewicht beziehen.

Die erfindungsgemässen Färbemittel eignen sich insbesondere zum Färben von Leimen, wie sie zur Herstellung von Spanplatten verwendet werden.

Die erfindungsgemässen Farbmittel bieten gegenüber bisher verwendeten Farbstoffen insbesondere ökonomische Vorteile. Überraschend war vor allem, dass sie sich in homogener Form herstellen und ohne Entmischung lagern lassen.

Beispiel 1

2 Teile eines Flüssigfarbstoffs, enthaltend 40% C.I. Acid Orange 7 (C.I. 15510) in Wasser,
1 Teil einer Pigmentpräparation, enthaltend 35% Farbruss (C.I. Pigment Black 7) sowie nichtionogene Dispergiermittel und Glykol,
werden unter Rühren gemischt. Es entsteht eine flüssige, leicht thixotrope Farbmittelmischung von guter Lagerbeständigkeit.

Beispiel 2

1 Teil eines Flüssigfarbstoffs, enthaltend 45% C.I. Basic Violet 49 (Herstellung ist beschrieben in der DE-A-2 228 260/Beispiel 3), und
1 Teil einer Pigmentpräparation, enthaltend 40% Eisenoxidrot (C.I. Pigment Red 101) sowie nichtionogene Dispergiermittel und Glykol,
werden unter Rühren gemischt. Man erhält eine gut fliessende Mischung, die sich leicht in Leime einarbeiten lässt.

Beispiel 3

2 Teile eines Flüssigfarbstoffs, enthaltend 45% C.I. Basic Violet 49 (siehe Beisp. 2), und
1 Teil einer Pigmentpräparation, enthaltend 60% Eisenoxidrot (C.I. Pigment Red 101) sowie nichtionogene Dispergiermittel und Dipropylenglykol,
werden unter Rühren gemischt. Man erhält einen gut fliessenden Teig, der mit Leimen gut mischbar ist.

Beispiel 4

2 Teile eines Flüssigfarbstoffs, enthaltend 45% C.I. Basic Violet 49 (siehe Beispiel 2), und
1 Teil einer Pigmentpräparation, enthaltend 35% Farbruss (C.I. Pigment Black 7) sowie nichtionogene Dispergiermittel und Glykol
werden unter Rühren gemischt. Es entsteht eine flüssige Farbmittelmischung von guter Fliessfähigkeit und Lagerstabilität.

Beispiel 5

2 Teile eines Flüssigfarbstoffs, enthaltend 40% C.I. Acid Orange 7 (siehe Beispiel 1) und
1 Teil einer Pigmentpräparation, enthaltend 40% Kupferphthalocyaninblau (C.I. Pigment Blue 15 : 1) sowie nichtionogene Dispergiermittel und Glykol,
werden unter Rühren gemischt. Die erhaltene lagerstabile Mischung lässt sich leicht in Leime einrühren.

Beispiel 6

200 Teile eines Flüssigfarbstoffs, enthaltend 40% C.I. Acid Orange 7 (siehe Beispiel 1),
45 Teile eines transparenten Eisenoxidrots (C.I. Pigment Red 101),
5 Teile eines oxethylierten Fettalkohols,
20 Teile Ethylenglykol und
80 Teile Wasser
werden auf einer Rührwerkskugelmühle eine Stunde lang angerieben. Das erhaltene teigförmige Farbmittel ist lagerstabil, stippenfrei und mit Leimen leicht mischbar.

Beispiel 7

100 Teile eines Flüssigfarbstoffs, enthaltend 45% C.I. Basic Violet 49 (siehe Beispiel 2),
120 Teile Eisenoxidrot (C.I. Pigment Red 101),
5 Teile eines oxethylierten Fettalkohols,
20 Teile Ethylenglykol und
40 Teile Wasser
werden auf einer Rührwerkskugelmühle eine Stunde lang angerieben. Man erhält einen gut fliessenden Teig, der sich leicht in Leime einarbeiten lässt.

**Beispiel 8**
100 Teile eines Flüssigfarbstoffs, enthaltend 45%
C.I. Basic Violet 49 (siehe Beispiel 2),
80 Teile β-Kupferphthalocyaninblau (C.I. Pigment Blue 15 : 3),
5 Teile eines oxethylierten Fettalkohols,
20 Teile Ethylenglykol und
80 Teile Wasser
werden auf einer Rührwerkskugelmühle eine Stunde lang angerieben. Die erhaltene teigförmige Mischung ist gut fliessfähig und mit Leimen einwandfrei mischbar.

**Beispiel 9**
100 Teile eines orangefarbenen Flüssigfarbstoffs
(s. Beispiel 3, DE-A-2 852 919),
80 Teile β-Kupferphthalocyaninblau (C.I. Pigment Blue 15 : 3),
5 Teile eines oxethylierten Fettalkohols,
20 Teile Ethylenglykol und
40 Teile Wasser
werden auf einer Rührwerkskugelmühle eine Stunde lang angerieben. Man erhält einen gut fliessenden Teig, der in Leime leicht eingerührt werden kann.

**Beispiel 10**
200 Teile eines Flüssigfarbstoffs, enthaltend 40%
C.I. Acid Orange 7 (siehe Beispiel 1),
250 Teile Eisenoxidrot (C.I. Pigment Red 101),
10 Teile eines Kondensationsproduktes von β-Naphthalinsulfonsäure und Formaldehyd (als Natriumsalz),
20 Teile Ethylenglykol und
20 Teile Wasser
werden auf einer Rührwerkskugelmühle eine Stunde lang angerieben. Der erhaltene lagerstabile Teig ist gut zum Färben von Leimen geeignet.

**Beispiel 11**
100 Teile eines Flüssigfarbstoffs, enthaltend 45%
C.I. Basic Violet 49 (siehe Beispiel 2),
120 Teile Eisenoxidrot (C.I. Pigment Red 101),
5 Teile $C_{12}/C_{14}$-Fettalkyl-dimethyl-benzyl-ammoniumchlorid,
20 Teile Ethylenglykol und
3 Teile Polyvinylpyrrolidon
werden auf einer Rührwerkskugelmühle eine Stunde lang angerieben. Man erhält einen lagerstabilen, gut fliessenden Teig, der mit Leimen sehr gut verträglich ist.

**Patentanspruch**

Homogene flüssige Farbmittel zum Färben von Leim mit 20 bis 70% farbgebenden Anteilen, enthaltend einen oder mehrere lösliche anionische oder kationische Farbstoffe, ein oder mehrere feinverteilte Pigmente, Wasser, wasserlösliche organische Lösungsmittel und Dispergiermittel sowie gegebenenfalls wasserlösliche organische Säuren.

**Claim**

A homogeneous fluid colorant for coloring glue, comprising 20 to 70% of colouring constituents consisting of one or more soluble anionic or cationic dyes, and one or more finely divided pigments; water; water-soluble organic solvents and dispersants; and, if desired, water-soluble organic acids.

**Revendication**

Matières colorantes liquides homogènes pour la coloration de colles, comportant 20 à 70% de constituants chromophores et contenant un ou plusieurs colorants anioniques ou cationiques solubles, un ou plusieurs pigments finement divisés, de l'eau, des solvants organiques solubles dans l'eau et des dispersants, avec, éventuellement, des acides organiques solubles dans l'eau.